Europäisches Patentamt

European Patent Office

Office européen des brevets

(11) Numéro de publication: **0 431 510 A1**

# (12) DEMANDE DE BREVET EUROPEEN

(21) Numéro de dépôt: 90123074.8

(51) Int. Cl.5: **H02H 9/02, H01H 33/59**

(22) Date de dépôt: 03.12.90

(30) Priorité: 08.12.89 FR 8916252

(43) Date de publication de la demande:
**12.06.91 Bulletin 91/24**

(84) Etats contractants désignés:
**AT BE CH DE DK ES FR GB GR IT LI LU NL SE**

(71) Demandeur: **GEC ALSTHOM SA**
**38, avenue Kléber**
**F-75116 Paris(FR)**

(72) Inventeur: **Pham, van Doan**
**8, impasse Magendie**
**F-69330 Meyzieu(FR)**

Inventeur: **Collet, Michel**
**25, rue de France**
**F-69100 Villeurbanne(FR)**
Inventeur: **Bekhaled, Mohamed**
**62, rue des Vignes**
**F-90800 Bavilliers(FR)**
Inventeur: **Verhaege, Thierry**
**22, allée G. Brassens**
**F-91160 Saulx Les Chartreux(FR)**

(74) Mandataire: **Weinmiller, Jürgen et al**
**Lennéstrasse 9 Postfach 24**
**W-8133 Feldafing(DE)**

(54) **Disjoncteur limiteur à courant continu à haute tension.**

(57) L'invention concerne un disjoncteur limiteur à courant continu, caractérisé par la combinaison de premiers moyens (51, 52) comprenant des enroulements supraconducteurs pour limiter la courant et de seconds moyens (D, L, C) pour interrompre le courant résiduel.

Application à la coupure des courants continus à haute tension.

## FIG.1

## DISJONCTEUR LIMITEUR A COURANT CONTINU A HAUTE TENSION

L'invention a trait à un disjoncteur limiteur à haute tension, pour la coupure des courants continus.

La coupure des courants continus en haute tension est un problème difficile.

Un but de l'invention est de réaliser un appareil permettant de résoudre ce problème de manière fiable et économique.

Le principe qui gouverne la présente invention est fondé sur une combinaison de premiers moyens connus en soi pour limiter la valeur du courant à couper et permettre alors l'application de seconds moyens également connus pour couper définitivement le courant résiduel.

Les premiers moyens sont par exemple décrits dans le document FR-A-2073731, et comprennent un enroulement supraconducteur qui, par transition à l'état normal, permet de limiter le courant de défaut a la valeur du courant nominal. Le document mentionne que le courant résiduel est coupé par un disjoncteur de puissance. Cela est facile en courant alternatif, mais très difficile en courant continu.

C'est la raison pour laquelle, selon l'invention, il est prévu d'associer aux premiers moyens des seconds moyens tels que ceux décrits dans le document IEEE Transactions on Power Apparatus and Systems, PIS 104 1985, Sept. 9 " Development of a 500 kV airblast HVDC circuit breaker" par B. Bachman, G. Mauthe, E.Ruoss et H.P. Lips. Ces seconds moyens comprennent un circuit résonant série permettant l'injection dans le circuit d'un courant oscillant qui crée des passages par zéro du courant à couper. La combinaison nouvelle et originale de l'invention permet de couper des courants de plusieurs milliers d'ampères sous des tensions de l'ordre de la centaine de kilovolts.

L'invention a ainsi pour objet un disjoncteur limiteur à courant continu destiné à être inséré entre deux points d'une ligne à courant continu comprenant des premiers moyens pour limiter l'intensité du courant et des seconds moyens pour interrompre le courant résiduel, lesdits premiers moyens comprenant un bobinage supraconducteur placé dans un cryostat, ledit bobinage étant constitué d'au moins une fois deux enroulements bobinés en sens inverse, l'un desdits enroulements étant relié en série avec un interrupteur, une résistance de faible valeur ohmique étant reliée aux bornes dudit interrupteur, caractérisé en ce que lesdits seconds moyens comprennent, en série avec ledit bobinage, un disjoncteur aux bornes duquel sont connectés une varistance et un circuit comprenant un condensateur et une inductance en série.

Dans un autre mode de réalisation, le disjoncteur limiteur à courant continu destiné à être inséré entre deux points d'une ligne à courant continu et comprenant des premiers moyens pour limiter l'intensité du courant et des seconds moyens pour interrompre le courant résiduel, lesdits premiers moyens comprenant un bobinage supraconducteur placé dans un cryostat, ledit bobinage étant constitué d'au moins une fois deux enroulements bobinés en sens inverse, l'un desdits enroulements étant relié en série avec un interrupteur, une résistance de faible valeur ohmique étant reliée aux bornes dudit interrupteur, est caractérisé en ce que lesdits seconds moyens comprennent, en série avec ledit bobinage, un disjoncteur et, en parallèle sur ce disjoncteur, un circuit comprenant, en série, un enclencheur, une inductance et un condensateur, une résistance reliant à la terre le point commun à l'inductance et au condensateur.

Avantageusement, des résistances d'ajustage sont montées en série avec chacun des enroulements supraconducteurs et disposées à l'extérieur du cryostat.

Une varistance est connectée entre lesdits deux points de la ligne ou aux bornes des moyens de limitation du courant.

L'invention sera bien comprise par la description donnée ci-après de divers modes de réalisation de l'invention, en référence au dessin annexé dans lequel:

- la figure 1 est une vue schématique du disjoncteur limiteur à courant continu de l'invention selon un premier mode de réalisation,
- la figure 2 est un diagramme expliquant un mode de fonctionnement du disjoncteur limiteur de l'invention pour la coupure du courant résiduel,
- la figure 3 est une vue schématique du disjoncteur limiteur selon une première variante de réalisation,
- la figure 4 est une vue schématique du disjoncteur limiteur selon une seconde variante de réalisation.

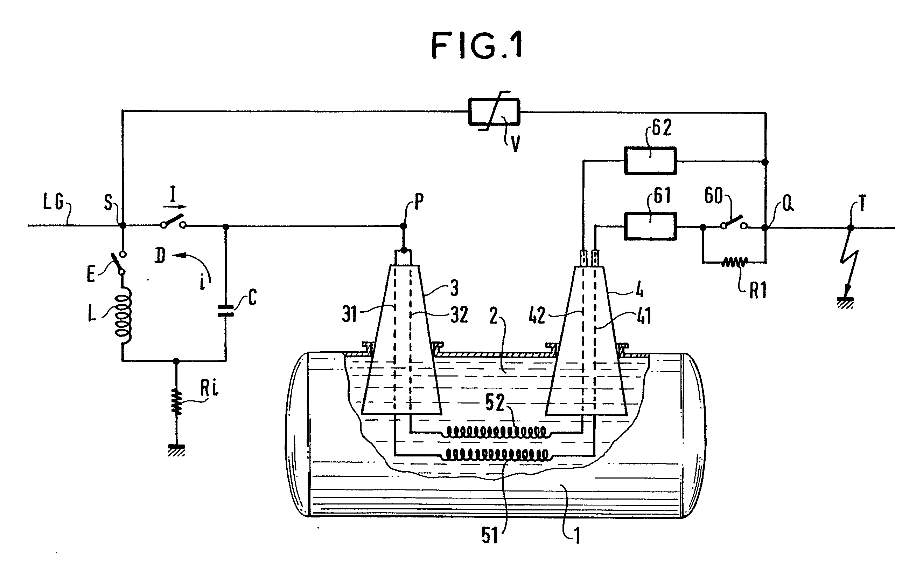

Dans la figure 1, la référence LG désigne une ligne à courant continu entre deux points S et Q de laquelle est inséré le disjoncteur limiteur de l'invention.

Ce dernier comprend deux séries de moyens:
- des premiers moyens pour limiter la valeur du courant, ce dernier pouvant être par exemple un courant de défaut, de forte intensité, ou le courant nominal de la ligne.
- des seconds moyens pour couper le courant résiduel qui subsiste après la limitation précitée.

Les moyens de limitation du courant comprennent un cryostat 1 à l'intérieur duquel est disposé un fluide cryogénique 2 susceptible de rendre supraconducteurs deux enroulements 51 et 52; ces derniers sont représentés côte à côte pour la clarté du dessin, mais en réalité, ils sont coaxiaux et bobinés en sens inverse pour réduire la valeur de leur inductance.

Le cryostat comporte deux traversées 3 et 4; les enroulements 51 et 52 sont reliés d'une part à des conducteurs 31 et 32 réunis en un point P à la sortie de la traversée 3, et, d'autre part, à des conducteurs 41 et 42 qui traversent la traversée 4 et se rejoignent au point Q.

En série avec l'un des enroulements, ici l'enroulement 51, est disposé, à l'extérieur du cryostat, un interrupteur 60 aux bornes duquel est connectée une résistance R1 de forte valeur ohmique.

Des résistances 61 et 62, de faibles valeurs, sont placées en série respectivement avec les enroulements 51 et 52, et servent à équilibrer les impédances des deux branches afin d'obtenir une bonne répartition du courant dans les enroulements 51 et 52.

Les seconds moyens, pour la coupure du courant résiduel, comprennent un disjoncteur D, inséré entre les points S et P.

Aux bornes du disjoncteur D est disposé un circuit comprenant les éléments ci-après reliés en série: un enclencheur E, une inductance L et un condensateur C chargé en permanence par la ligne LG.

Une résistance Ri de très grande valeur ohmique relie à la terre le point commun à l'inductance et au condensateur.

Une varistance V, reliée aux points S et Q, complète l'appareil.

Le fonctionnement de l'appareil est décrit maintenant.

En fonctionnement normal, le disjoncteur D et l'interrupteur 60 sont fermés, l'enclencheur E reste ouvert.

Coupure des courants de défaut

Si un défaut à la terre survient, par exemple au point T, le courant de défaut croit très vite et dépasse très vite le courant critique des fils supraconducteurs; les enroulements 51 et 52 transitent automatiquement à l'état non supraconducteur (c'est l'auto-transition), et deviennent électriquement résistants.

Immédiatement, la tension en S monte rapidement, surtension due à l'énergie électromagnétique du réseau

$(1/2\ L_oI_o)$ qui se transforme en énergie électrostatique $(1/2\ C_oU_o)$.

La varistance V, de tension de fonctionnement réglée à 1,1 ou 1,2 U (U tension nominale du réseau),conduit et absorbe une grande partie de cette énergie.

La partie restante de cette énergie est absorbée par les enroulements 51 et 52.

Cette surtension dure quelques millisecondes. Après ce régime transitoire, la tension U appliquée sur les enroulements 51 et 52 donne naissance à un courant résiduel Ir de l'ordre d'une centaine d'ampères par exemple.

Environ 20 millisecondes après la transition ou après le défaut, on ouvre le disjoncteur D; un arc s'établit sur ses contacts. Quelques millisecondes après, on ferme l'enclencheur E.

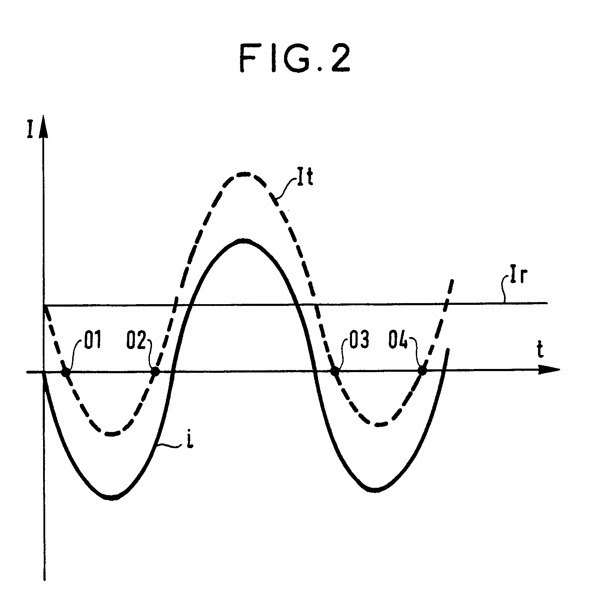

Le condensateur C, chargé électriquement, injecte alors à travers le disjoncteur D et l'inductance L un courant oscillatoire i superposé au courant résiduel Ir, d'amplitude supérieure à Ir, créant ainsi des passages à zéro du courant résultant It (voir figure 2) en 01, 02, 03, 04, ... Ceci facilite grandement la coupure du disjoncteur D.

Si à la coupure de D, la surtension est faible, on pourra mettre la varistance V entre les points P et Q et non entre les points S et Q.

Coupure des courants nominaux ou inférieurs au courant critique

On utilise une méthode de transition successive des enroulements 51 et 52.

L'ouverture de l'interrupteur 60 crée un arc qui déséquilibre la répartition des courants entre les enroulements 51 et 52. Il y a d'abord transition de l'enroulement 52 par passage de son courant au-dessus de la valeur critique, puis transition de l'enroulement 51.

Donnons un exemple: soit In le courant nominal à couper, fixons la valeur du courant critique Ic égale à 1,5In.

En supposant la répartition de courant entre les enroulements à 50%-50%, le courant critique dans chaque enroulement sera de Ic/2.

En ouvrant l'interrupteur 60, In tend à passer dans l'enroulement 52; comme In est supérieur à Ic/2, l'enroulement 52 transite de l'état supraconducteur à l'état normal. Tout le courant In tend à repasser dans l'enroulement 51 qui transite à son tour.

A la transition de l'enroulement 51, il y a surtension aux bornes du dispositif et la varistance V fonctionne.

Immédiatement après l'ouverture de l'interrupteur 60, on ouvre le disjoncteur D, puis on ferme l'enclencheur E pour injecter le courant i dans le disjoncteur D.

La durée de passage du courant résiduel dans les enroulements 51 et 52 sera cetta fois plus faible que dans le cas précédent, entraînant moins de pertes cryogéniques.

Cette méthode, utilisée avec deux enroulements supraconducteurs, permet d'assurer les transitions pour des courants permanents non inférieurs à Ic/2.

On peut, en variante, utiliser quatre enroulements supraconducteurs au lieu de deux, ce qui permet alors d'assurer des transitions pour des courants permanents aussi faibles que Ic/4.

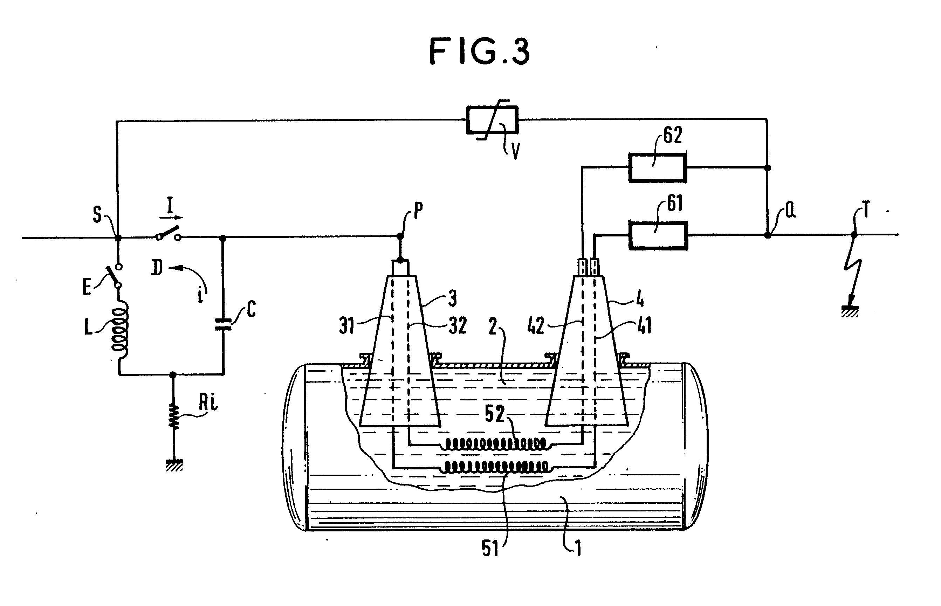

La figure 3 représente une variante de réalisation du disjoncteur limiteur de l'invention.

Les éléments communs aux figures 1 et 3 ont reçu les mêmes numéros de référence.

Le montage diffère de celui de la figure 1 en ce que l'interrupteur 60 et la résistance R1 sont supprimés.

Le fonctionnement en cas de défaut est identique au cas précédent: transition des enroulements 51 et 52, puis injection du courant i.

En cas de coupure des courants inférieurs à la valeur critique Ic, le fonctionnement est le même aussi.

On note que dans cette variante, on a besoin d'un courant injecté i légèrement supérieur à Ic; ceci nécessite une valeur de la capacité du condensateur C beaucoup plus grande.

Par exemple, supposons que dans le premier cas, on ait besoin d'un courant injecté i de 0,25 Ic; dans le deuxième cas, on a besoin d'un courant i = Ic . Ceci nécessite une capacité 16 fois plus grande puisque le rapport des capacités est comme le carré du rapport des courants.

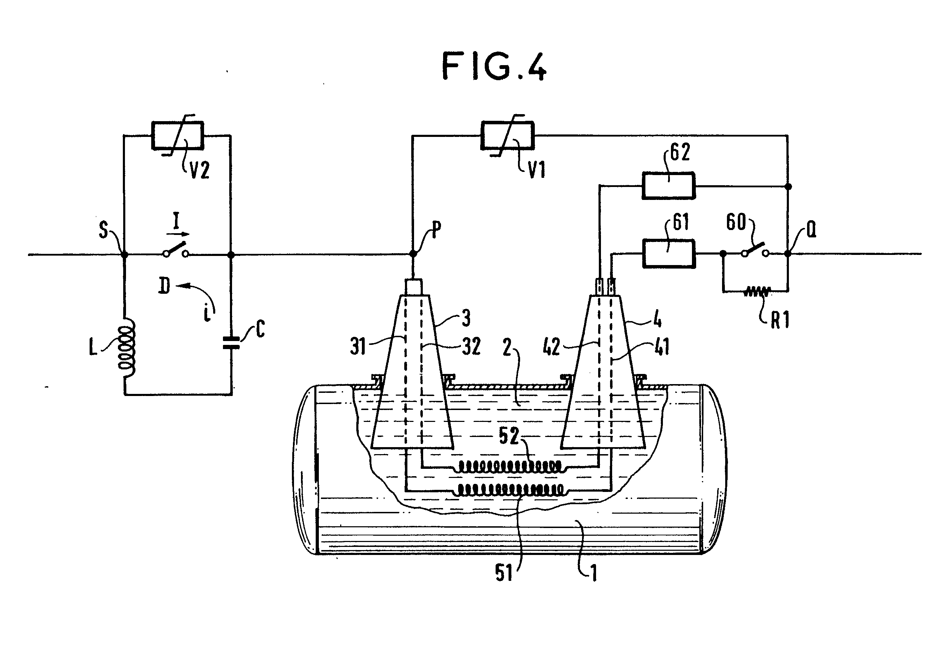

La figure 4 représente une variante de réalisation qui diffère de celle de la figure 1 en ce que l'enclencheur E et la résistance Ri ont été supprimés. Par ailleurs, on a placé une varistance V1 entre les points P et Q et une autre varistance V2 aux bornes du disjoncteur D.

La transition des enroulements ayant eu lieu, il reste à couper le courant résiduel Ir.

Le principe utilisé cette fois pour la coupure du courant résiduel est fondé sur la caractéristique négative de l'arc.

Cet arc permet d'amplifier le courant i opposé à Ir jusqu'à la création d'un passage à zéro du courant résultant dans le disjoncteur D.

Après la coupure du disjoncteur D, le courant Ir est transféré dans le circuit LC. Quand la tension aux bornes de C atteint une valeur suffisante, la varistance V2 fonctionne. Le courant Ir est alors transféré dans la varistance V2 qui absorbe l'énergie électromagnétique du circuit.Ceci entraîne l'extinction de Ir. Ce principe est décrit dans IEEE, vol. PAS 104, N° 10, octobre 1985, "High Voltage Direct Current Circuit breaker development and field tests".

Il est aisé de calculer les divers éléments de l'appareil dont plusieurs modes de réalisation viennent d'être décrits.

On détermine, en fonction de Ic,Ir, i et du pouvoir de coupure du disjoncteur D, les valeurs de L, C et de la fréquence f du courant injecté i.

Par exemple, pour la figure 1:
U = 100 kV, Ic = 2 500 A , i = 3 150 A,
C = 10 microfarads, L = 0,01 henry, f = 500 Hz.

L'invention s'applique à la coupure des courants continus à haute tension.

## Revendications

1. Disjoncteur limiteur à courant continu destiné à être inséré entre deux points (S, Q) d'une ligne à courant continu comprenant des premiers moyens (51, 52) pour limiter l'intensité du courant et des seconds moyens (D, L, C, V) pour interrompre le courant résiduel, lesdits premiers moyens comprenant un bobinage supraconducteur placé dans un cryostat, ledit bobinage étant constitué d'au moins une fois deux enroulements (51, 52) bobinés en sens inverse, l'un desdits enroulements étant relié en série avec un interrupteur (60), une résistance (R1) de faible valeur ohmique étant reliée aux bornes dudit interrupteur, caractérisé en ce que lesdits seconds moyens comprennent, en série avec ledit bobinage, un disjoncteur (D) aux bornes duquel sont connectés une varistance (V2) et un circuit comprenant un condensateur (C) et une inductance (L) en série.

2. Disjoncteur limiteur à courant continu destiné à être inséré entre deux points (S, Q) d'une ligne à courant continu comprenant des premiers moyens (51, 52) pour limiter l'intensité du courant et des seconds moyens (D, L, C, V) pour interrompre le courant résiduel, lesdits premiers moyens comprenant un bobinage supraconducteur placé dans un cryostat, ledit bobinage étant constitué d'au moins une fois deux enroulements (51, 52) bobinés en sens inverse, l'un desdits enroulements étant relié en série avec un interrupteur (60), une résistance (R1) de faible valeur ohmique étant reliée aux bornes dudit interrupteur, caractérisé en ce que lesdits seconds moyens comprennent, en série avec ledit bobinage, un disjoncteur (D) et, en parallèle sur ce disjoncteur, un circuit comprenant, en série, un enclencheur (E), une inductance (L) et un condensateur (C), une résistance (Ri) reliant à la terre le point commun à l'inductance et au condensateur.

3. Disjoncteur limiteur selon l'une des revendications 1 et 2, caractérisé en ce que des résistances d'ajustage (61, 62) sont montées en série avec chacun des enroulements supraconducteurs et disposées à l'extérieur du cryostat (1).

4. Disjoncteur limiteur selon l'une des revendications 1 à 3, caractérisé en ce qu'une varistance V est connectée entre lesdits deux points (S, Q) de la ligne.

4. Disjoncteur limiteur selon l'une des revendications 1 à 3, caractérisé en ce qu'une varistance (V1) est connectée aux bornes (P, Q) des moyens de limitation du courant.

FIG.1

# FIG.2

# FIG.3

EP 0 431 510 A1

# FIG.4

**Office européen
des brevets**

# RAPPORT DE RECHERCHE
## EUROPEENNE

Numéro de la demande

## EP 90 12 3074

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | FR-A-2 073 731 (SIEMENS)<br>* pages 1 - 2, ligne 5 * * page 11, lignes 3 - 31 * * page 17, lignes 22 - 24 * | 1,2 | H 02<br>H 9/02<br>H 01 H 33/59 |
| A | DE-A-1 565 993 (A.S.E.A.)<br>* page 2, dernier alinéa - page 3, alinéa 1 * * page 5, lignes 4 - 18 * * page 8, alinéa 2 - page 9, alinéa 1 * * page 10, lignes 11 - 21 * * page 14, dernier alinéa - page 15, alinéa 2 * | 1,2 | |
| A,D | IEEE TRANSACTIONS ON POWER APPARATUS AND SYSTEMS. vol. 104, no. 9, septembre 1985, NEW YORK US pages 2460 - 2466; B. BACHMAN: "DEVELOPMENT OF A 500 kV AIRBLAST HVDC CIRCUIT BREAKER"<br>* pages 1 - 2 * | 1 | |
| A | DE-A-3 734 989 (HITACHI)<br>* colonne 1, lignes 1 - 18 * | 2 | |
| A | DE-A-2 410 148 (LICENTIA PATENT)<br>* le document en entier * | 1,2 | |
| A | FR-A-2 102 793 (C.G.E.)<br>* le document en entier * | 1,2 | **DOMAINES TECHNIQUES RECHERCHES (Int. Cl.5)**<br><br>H 01 H<br>H 02 H |

Le présent rapport de recherche a été établi pour toutes les revendications

| Lieu de la recherche | Date d'achèvement de la recherche | Examinateur |
|---|---|---|
| La Haye | 20 février 91 | DESMET W.H.G. |

CATEGORIE DES DOCUMENTS CITES
X : particulièrement pertinent à lui seul
Y : particulièrement pertinent en combinaison avec un
autre document de la même catégorie
A : arrière-plan technologique
O : divulgation non-écrite
P : document intercalaire
T : théorie ou principe à la base de l'invention

E : document de brevet antérieur, mais publié à la
date de dépôt ou après cette date
D : cité dans la demande
L : cité pour d'autres raisons

&: membre de la même famille, document
correspondant